# FASCICULE DE BREVET EUROPEEN

(11) **EP 0 938 451 B1**
(45) Date de publication et mention de la délivrance du brevet: **19.12.2001**
(21) Numéro de dépôt: 97938947.5
(22) Date de dépôt: 25.08.1997
(51) Int. Cl.: C01B 35/12, C09K 11/77

(54) **PROCEDE DE PREPARATION D'UN BORATE DE TERRE RARE PAR REACTION D'AU MOINS UN SEL DE TERRE RARE, D'ACIDE BORIQUE ET D'UNE BASE**
VERFAHREN ZUR HERSTELLUNG EINES SELTENEN - ERDBORATS DURCH DIE REAKTION VON WENIGSTENS EINEM SELTENEN ERDSALZ UND EINER BASE
METHOD FOR PREPARING A RARE EARTH BORATE BY REACTING AT LEAST ONE RARE EARTH SALT, BORIC ACID AND A BASE

(30) Priorité: 03.09.1996 FR 9610724
(43) Date de publication de la demande: 01.09.1999
(73) Titulaire: RHODIA CHIMIE, 92408 Courbevoie Cédex (FR)
(72) Inventeur: HUGUENIN, Denis, F-92600 Asnières-sur-Seine (FR); MACAUDIERE, Pierre, F-92600 Asnières-sur-Seine (FR); MAHIOU, Rachid, F-63100 Clermont-Ferrand (FR)
(74) Mandataire: Dubruc, Philippe
(86) Numéro de dépôt international: FR9701523
(87) Numéro de publication internationale: WO9809915

(56) Documents cités:
- EP-A- 0 258 545
- WO-A-87/06601
- US-A- 5 043 308
- US-A- 5 104 845
- PATENT ABSTRACTS OF JAPAN vol. 10, no. 318 (C-381) [2374] , 29 octobre 1986 & JP 61 127784 A (KASEI OPTONIX CO LTD), 16 juin 1986,
- CHEMICAL ABSTRACTS, vol. 92, no. 14, 7 avril 1980 Columbus, Ohio, US; abstract no. 120902, WYSOCKA-LISEK, JANINA ET AL: "Preparation of crystallophosphors from borates of rare earth elements and possible use for luminescence determination of rare earth elements. I" XP002029217 & ZESZ. NAUK. POLITECH. SLASK., CHEM. (1979), (88), 178-9 CODEN: ZNSCAM;ISSN: 0372-9494, 1979,

## Description

La présente invention concerne un procédé de préparation d'un borate de terre rare par réaction d'au moins un sel de terre rare, d'acide borique et d'une base.

Les domaines de la luminescence et de l'électronique connaissent actuellement des développements importants. On peut citer comme exemple de ces développements, la mise au point des systèmes à plasma (écrans et lampes) pour les nouvelles techniques de visualisation et d'éclairage. Une application concrète est celle du remplacement des écrans de télévision actuels par des écrans plats. Ces nouvelles applications nécessitent des matériaux luminophores présentant des propriétés de plus en plus améliorées. Les borates de terres rares constituent des matériaux de ce type.

Or, il est important que ces borates présentent une bonne pureté phasique et une bonne cristallinité pour être utilisés dans les applications mentionnées plus haut.

On connaît des procédés de préparation de ces borates par réaction solide d'oxydes de terres rares et d'acide borique. Ces procédés présentent l'inconvénient de conduire à des produits qui ne sont pas phasiquement purs ou encore qui ne peuvent pas être calcinés à une température élevée. Ce dernier point constitue une gène car le rendement lumineux des luminophores dépend de cette température et est d'autant plus important que celle-ci est élevée.

Un objet de l'invention est la mise au point d'un procédé ne présentant pas ces désavantages.

Dans ce but, le procédé selon l'invention de préparation d'un borate de terre rare par réaction d'au moins un sel de terre rare, d'acide borique et d'une base, est caractérisé en ce qu'on effectue la réaction en utilisant un excès d'acide par rapport à la stoechiométrie et dans des conditions telles que le pH du milieu réactionnel en fin de réaction soit compris entre 6 et 8, on récupère le précipité formé et on le calcine.

D'autres caractéristiques, détails et avantages de l'invention apparaîtront encore plus complètement à la lecture de la description qui va suivre, ainsi que des divers exemples concrets mais non limitatifs destinés à l'illustrer.

Le procédé de l'invention concerne la préparation de borates de terre rare. Par terre rare on entend pour l'ensemble de la présente description les éléments du groupe constitué par l'yttrium, le scandium et les éléments de la classification périodique de numéro atomique compris inclusivement entre 57 et 71.

Par borate de terre rare on entend les produits de formule LnBO₃ (orthoborate), Ln désignant la terre rare telle que définie ci-dessus. Il est entendu que le procédé de la présente invention s'applique aussi à la préparation de borates mixtes de terres rares de formule LnBO₃, Ln étant constitué d'un mélange de deux ou plusieurs terres rares. Le procédé de la présente invention peut être utilisé tout particulièrement pour la préparation d'un borate d'yttrium, de lanthane ou de gadolinium.

Le procédé s'applique de même à la préparation de borates de terre rare dopés de formule Ln₁₋ₓMₓBO₃ dans laquelle M représente un élément dopant. Cet élément dopant a pour but de donner au borate des propriétés de luminescence ou de les renforcer et il peut être choisi dans le groupe comprenant l'antimoine, le bismuth, le cérium, le terbium, le lanthane, le gadolinium, l'europium, le thulium, rerbium et le praséodyme. Comme des terres rares figurent dans ce groupe, il va de soi que la terre rare utilisée à titre de dopant sera différente de la terre rare constitutive du borate.

Le procédé de l'invention consiste à faire réagir un sel de terre rare, de l'acide borique et une base. Le sel de terre rare peut être un sel inorganique ou organique. On utilise de préférence les sels solubles dans l'eau. Comme sel de terre rare on peut citer plus particulièrement le nitrate. Dans le cas de la préparation de borates mixtes on utilisera bien entendu un sel de chacune des terres rares concernées.

Comme base, on utilise en particulier l'ammoniaque.

Dans le cas de la préparation d'un borate dopé, on effectue la réaction en présence d'un sel de cet élément et ce qui a été dit plus haut pour les sels de terre rare s'applique aussi ici. On travaille habituellement dans des conditions telles que la teneur en dopant est d'au plus 50% en mole par rapport au borate de terre rare, plus particulièrement d'au plus 20%.

De préférence, on conduit la réaction à chaud, par exemple à une température comprise entre 40°C et 90°C.

Une caractéristique du procédé de l'invention est l'utilisation d'un excès d'acide borique pour la réaction entre le sel de terre rare et l'acide borique. Par excès, on entend que le rapport atomique B/Ln est supérieur à 1. Généralement, on se limite à un rapport d'au plus 50% (c'est à dire un rapport B/Ln de 1,5), plus particulièrement d'au plus 30%. Des rapports supérieurs présentent surtout l'inconvénient d'avoir à éliminer une quantité importante d'acide borique à la fin de la réaction ce qui rend le procédé moins intéressant d'un point de vue industriel. Habituellement, on utilise un excès d'acide borique compris entre 10% et 30%, plus particulièrement de 20% ou d'environ 20%.

Une autre caractéristique du procédé de l'invention est que le pH du milieu réactionnel en fin de réaction soit compris entre 6 et 8. Cette valeur de pH peut dépendre de la nature de la terre rare du borate que l'on cherche à préparer. Ainsi, lorsque la terre rare est le lanthane, le pH doit être de préférence compris entre 7,5 et 8. Dans le cas du gadolinium, le pH doit être de préférence compris entre 6,5 et 7. Enfin, dans le cas de l'yttrium, le pH est de préférence 7 ou d'environ 7. Les valeurs de pH données ci-dessus sont celles qui permettent d'avoir le plus facilement possible des produits de bonne pureté phasique.

Selon un mode de réalisation particulier de l'invention, on effectue la réaction en formant un mélange comprenant au moins un sel de terre rare et l'acide borique. Après homogénéisation éventuelle du mélange ainsi formé, on ajoute la base au mélange jusqu'à l'obtention du pH désiré. Il se forme alors un précipité.

Une fois la réaction de précipitation terminée, on peut procéder éventuellement à un mûrissement du milieu réactionnel.

On sépare le précipité du milieu réactionnel par tout moyen convenable.

Le précipité obtenu peut être lavé puis éventuellement séché, par exemple à l'étuve. Le précipité peut être broyé si nécessaire.

On procède ensuite à la calcination du précipité. Cette calcination se fait à une température suffisante pour obtenir le borate sous forme cristalline.

Le précipité peut être calciné à une température comprise entre 1000°C et 1500°C ce qui permet d'obtenir ainsi un borate ayant un bon rendement en luminescence.

Il peut être intéressant de procéder à une première calcination à une température plus basse, notamment de l'ordre de 500°C de manière à éliminer les impuretés du type nitrate d'ammonium par exemple, puis d'effectuer une seconde calcination à une température située dans la gamme donnée plus haut.

Un exemple non limitatif va maintenant être donné.

### EXEMPLE

Cet exemple concerne la préparation d'un orthoborate de formule Y_{0,9}Eu_{0,1}BO₃.

On utilise les solutions de départ suivantes :

H₃BO₄ 0,24M

Y(NO₃)₃0,18M

Eu(NO₃)₃ 0,02M

Les solutions sont mélangées sous agitation pendant 30 minutes à une température de 60°C.

On ajoute au mélange formé goutte à goutte une solution d'ammoniaque à 20% jusqu'à l'obtention d'un pH de 7. On laisse ensuite mûrir le mélange pendant 30 minutes. On effectue un lavage du précipité par centrifugation puis on le sèche 24h à l'étuve.

On calcine ensuite le produit 2 heures à 500°C puis 2 heures à 1100°C.

Par diffraction X on observe que le produit obtenu se présente sous la forme d'une phase unique YBO3.

## Revendications

1. Procédé de préparation d'un borate de terre rare de formule LnBO₃ et se présentant sous la forme d'une phase unique, par réaction d'au moins un sel de terre rare, d'acide borique et d'une base, **caractérisé en ce qu'**on effectue la réaction en utilisant un excès d'acide par rapport à la stoechiométrie et dans des conditions telles que le pH du milieu réactionnel en fin de réaction soit compris entre 6 et 8, on récupère le précipité formé et on le calcine.

2. Procédé selon la revendication 1, **caractérisé en ce que** l'excès d'acide borique est compris entre 10 et 30%.

3. Procédé selon la revendication 1 ou 2, **caractérisé en ce qu'**on effectue la réaction en formant un mélange comprenant au moins un sel de terre rare et l'acide borique et en ajoutant la base au mélange.

4. Procédé selon l'une des revendication précédente, **caractérisé en ce qu'**on effectue la réaction en présence d'un sel d'un élément dopant.

5. Procédé selon la revendication 4, **caractérisé en ce que** l'élément dopant est choisi dans le groupe comprenant l'antimoine, le bismuth, le cérium, le terbium, le lanthane, le gadolinium, l'europium, le thulium, l'erbium et le praséodyme.

6. Procédé selon l'une des revendications précédentes, **caractérisé en ce qu'**on calcine le précipité à une température comprise entre 1000°C et 1500°C.

7. Procédé selon l'une des revendications 3 à 6, **caractérisé en ce que** la terre rare est le lanthane et **en ce que** le pH est compris entre 7,5 et 8.

8. Procédé selon l'une des revendications 3 à 6, **caractérisé en ce que** la terre rare est le gadolinium et **en ce que** le pH est compris entre 6,5 et 7.

9. Procédé selon l'une des revendications 3 à 6, **caractérisé en ce que** la terre rare est l'yttrium et **en ce que** le pH est de 7.

10. Procédé selon l'une des revendications précédentes, **caractérisé en ce que** la base est l'ammoniaque.

## Patentansprüche

1. Verfahren zur Herstellung eines Seltenerdborats der Formel LnBO₃, das in Form einer einzigen Phase vorliegt, durch Reaktion von wenigstens einem Seltenerdsalz, Borsäure und einer Base, **dadurch gekennzeichnet, dass** man die Reaktion unter Verwendung eines stöchiometrischen Säureüberschusses und unter solchen Bedingungen ausführt, dass der pH des Reaktionsmediums am Reaktionsende zwischen 6 und 8 liegt, man den gebildeten Niederschlag gewinnt und man ihn calciniert.

2. Verfahren gemäß Anspruch 1, **dadurch gekennzeichnet, dass** der Borsäureüberschuss zwischen 10 und 30% liegt.

3. Verfahren gemäß Anspruch 1 oder 2, **dadurch gekennzeichnet, dass** man die Reaktion ausführt, indem man ein Gemisch bildet, das wenigstens ein Seltenerdsalz und Borsäure umfasst, und indem man die Base dem Gemisch zugibt.

4. Verfahren gemäß einem der vorhergehenden Ansprüche, **dadurch gekennzeichnet, dass** man die Reaktion in Gegenwart eines Salzes eines dotierenden Elements ausführt.

5. Verfahren gemäß Anspruch 4, **dadurch gekennzeichnet, dass** das dotierende Element aus der Gruppe ausgewählt ist, die Antimon, Wismut, Cer, Terbium, Lanthan, Gadolinium, Europium, Thulium, Erbium und Praseodym umfasst.

6. Verfahren gemäß einem der vorhergehenden Ansprüche, **dadurch gekennzeichnet, dass** man den Niederschlag bei einer Temperatur zwischen 1000 °C und 1500 °C calciniert.

7. Verfahren gemäß einem der Ansprüche 3 bis 6, **dadurch gekennzeichnet, dass** die Seltene Erde Lanthan ist, und dadurch, dass der pH zwischen 7,5 und 8 liegt.

8. Verfahren gemäß einem der Ansprüche 3 bis 6, **dadurch gekennzeichnet, dass** die Seltene Erde Gadolinium ist, und dadurch, dass der pH zwischen 6,5 und 7 liegt.

9. Verfahren gemäß einem der Ansprüche 3 bis 6, **dadurch gekennzeichnet, dass** die Seltene Erde Yttrium ist, und dadurch, dass der pH 7 beträgt.

10. Verfahren gemäß einem der vorhergehenden Ansprüche, **dadurch gekennzeichnet, dass** die Base Ammoniak ist.

## Claims

1. A process for preparing a rare earth borate with formula LnBO₃ and in the form of a single phase by reacting together at least one rare earth salt, boric acid and a base, **characterized in that** the reaction is carried out using an excess of acid with respect to the stoichiometry and under conditions such that the pH of the reaction medium at the end of the reaction is in the range 6 to 8, recovering the precipitate formed then calcining it.

2. A process according to claim 1, **characterized in that** the excess of boric acid is in the range 10% to 30%.

3. A process according to claim 1 or claim 2, **characterized in that** the reaction is carried out by forming a mixture comprising at least one rare earth salt and boric acid and adding the base to the mixture.

4. A process according to any one of the preceding claims, **characterized in that** the reaction is carried out in the presence of a salt of a doping element.

5. A process according to claim 4, **characterized in that** the doping element is selected from the group formed by antimony, bismuth, cerium, terbium, lanthanum, gadolinium, europium, thulium, erbium and praseodymium.

6. A process according to any one of the preceding claims, **characterized in that** the precipitate is calcined at a temperature in the range 1000°C to 1500°C.

7. A process according to any one of claims 3 to 6, **characterized in that** the rare earth is lanthanum and the pH is in the range 7.5 to 8.

8. A process according to any one of claims 3 to 6, **characterized in that** the rare earth is gadolinium and the pH is in the range 6.5 to 7.

9. A process according to any one of claims 3 to 6, **characterized in that** the rare earth is yttrium and the pH is 7.

10. A process according to any one of the preceding claims, **characterized in that** the base is ammonia.
